(19) Europäisches Patentamt
European Patent Office
Office européen des brevets

(11) **EP 1 936 933 A1**

(12) **EUROPEAN PATENT APPLICATION**

(43) Date of publication:
**25.06.2008 Bulletin 2008/26**

(51) Int Cl.:
*H04M 3/51* (2006.01)     *H04L 29/06* (2006.01)
*H04M 7/00* (2006.01)     *H04M 7/00* (2006.01)

(21) Application number: **07023429.9**

(22) Date of filing: **04.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **18.12.2006  US 612053**

(71) Applicant: **Paraxip Technologies
H3A 1V4 Montréal QC (CA)**

(72) Inventor: **Lavoie, Dominic
H4L 4C4 Ville Saint-Laurent
Québec (CA)**

(74) Representative: **Fuhlendorf, Jörn
Patentanwälte
Dreiss, Fuhlendorf, Steimle & Becker,
Postfach 10 37 62
70032 Stuttgart (DE)**

(54) **Method of performing call progress analysis, call progress analyzer and caller for handling call progress analysis result**

(57)   The present invention relates to a method for performing call progress analysis, a call progress analyzer and a caller for handling call progress results. The method and the call progress analyzer are adapted to receive call related information, order the received call related information, and determine there from at least one probable outcome for the call related information, along with at least one corresponding confidence level. For doing so, the call progress analyzer includes an input, a buffer for ordering the received call related information, an output evaluating module for evaluating and determining the at least one probable outcome and the at least one confidence level thereof. The call progress analyzer further includes an output for sending the at least one probable outcome and at least one corresponding confidence level to a caller related to the received call related information. Finally, the caller includes an input for receiving the at least one probable outcome and the at least one confidence level, and a decision module for determining whether one of the at least one probable outcome is conclusive.

*Fig. 1*

**Description**

FIELD OF THE INVENTION

The present invention relates to call progress analysis, and more particularly to a method of performing call progress analysis, to a call progress analyzer and to a caller for handling call progress analysis result.

BACKGROUND OF THE INVENTION

Calling centers are used for performing telemarketing and massive call programs. In the past, operators used to manually dial numbers provided on lists. But such dialing was inefficient and time consuming for the operators. To increase efficiency, automatic dialers were introduced. Automatic dialers can either automatically dial numbers provided on lists, or proceed sequentially to dialing all possible numbers in a region or area code. However, automatic dialers are not capable of discriminating between a busy tone, a ringing tone, a fax, etc. To overcome this problem, call progress analysis is used to determine when calls made by the automatic dialer are successful. For example, calls that cannot be completed because of busy signals should not be connected with operators.

Some prior art patents have described various ways of performing call progress analysis. One of those prior art patents of interest is patent application U.S. 2002/0176557 to Snowshore Networks Inc, published on November 28, 2002. This published application describes a system and method for performing call progress analysis for various in-band signaling plans. Various types of call progress analysis resource are predefined, and by a pre-analysis of address information for a call destination in a call initiation message, an appropriate call progress analysis resource is selected. Although this published application describes determining a most probable outcome for the call based on the selected call progress analysis resource, this published application does not describe nor teach providing a confidence level for the most probable outcome. It would be very advantageous to have both a probable outcome along with a corresponding confidence level so as to discriminate between high and low reliability.

Another published patent application related to call progress analysis is U.S. 2002/0172349 to Phillip N. Shea. This published application describes using an artificial neural network for performing call progress analysis. Use of the artificial neural network for call progress analysis is quite interesting as it allows having a discrimination algorithm that is self-training and thus improving in accuracy of determined probable outcome for the analyzed call. However, this published application does not resolve the issue of not knowing a confidence level for the determined probable outcome.

As can be appreciated, none of the prior art solutions are capable of determining and providing a level of confidence for a probable outcome of the call progress analysis. There is therefore a need to provide a method for performing call progress analysis and a call progress analyzer capable of determining a probable outcome and a corresponding level of confidence.

SUMMARY OF THE INVENTION

In order to overcome the problems encountered in the prior art, the present invention describes a method for performing call progress analysis and a call progress analyzer capable of providing a probable outcome of the call along with a corresponding confidence level.

In a first aspect, the present invention relates to a method for performing call progress analysis. The method has a step of receiving call related information. The method pursues with ordering received call related information and evaluating ordered call related information to determine a t least one probable outcome for the call related information and a confidence level for each of the determined at least one probable outcome.

In another aspect, the present invention relates to a call progress analyzer. The call progress analyzer includes an input, a buffer, an outcome evaluating module and an output. The input is adapted for receiving call related information. The buffer uses call related information received by the input, and is adapted to order the received call related information. Then, the ordered call related information is used by the outcome evaluating module for determining at least one probable outcome along with at least one corresponding confidence level therefore. The output is adapted for sending the at least one probable outcome and the at least one confidence level to a caller corresponding to the call related information.

In yet another aspect, the present invention relates to a caller for handling call progress analysis result. The caller includes an input, an extraction module and a decision module. The input is adapted to receive the call progress analysis result. The extraction module is adapted to extract from the received call progress analysis result at least one probable outcome and at least one corresponding confidence level. Then, the decision module determines whether the confidence level is above a predetermined threshold, and when the confidence level is above the predetermined threshold, considers the corresponding probable outcome as conclusive.

BRIEF DESCRIPTION OF THE DRAWINGS

The present invention will be more easily understood with reference to the following Figures, in which like references denote like parts/steps. The following Figures will further be used in connection with the Detailed Description of the Invention to describe aspects of the present invention, in which:

    Figure 1 is a schematic view of a network for performing call progress analysis in accordance with the present invention;

Figure 2 is a call flow diagram depicting exchanges of messages for performing call progress analysis in accordance with an aspect of the present invention;

Figure 3 is a flow chart of a method for performing call progress analysis in accordance with another aspect of the present invention;

Figure 4 is a block diagram of a call progress analyzer in accordance with another aspect of the present invention;

Figure 5 is a schematic representation of a neuronal network for performing call progress analysis with another aspect of the present invention; and

Figure 6 is a block diagram of a caller in accordance with yet another aspect of the present invention.

DETAILED DESCRIPTION OF THE INVENTION

The present invention provides a method and a call progress analyzer for determining a probable outcome of a call based on received call related information, and for determining a corresponding confidence level for the probable outcome.

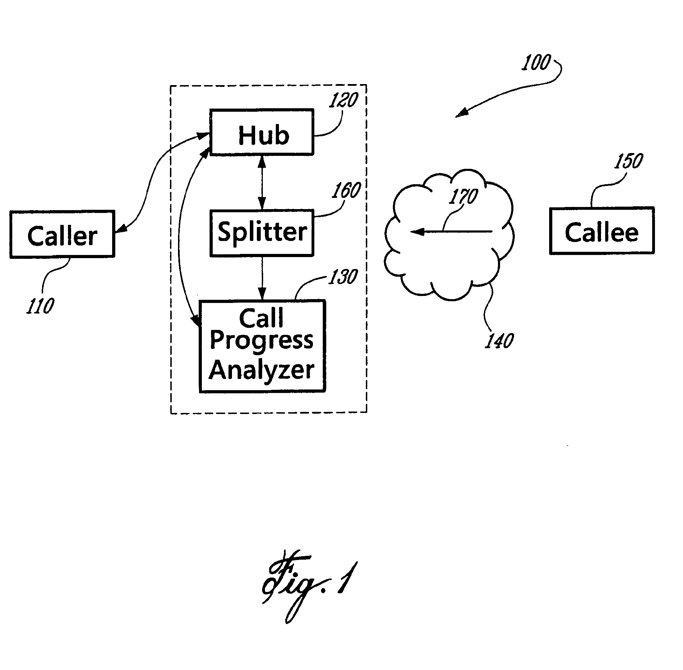

Referring to Figure 1, there is shown a schematic view of a network 100 for performing call progress analysis in accordance with the present invention. The network 100 typically includes a caller 110, a hub 120, a call progress analyzer 130, a telecommunications network 140 and a callee 150. It should be noted that the expression "call progress analysis" generally is used to refer to an analysis of the progression of a call, from its establishment to its termination.

The caller 110 could consist of a telemarketer, an automatic dialer, an operator, or any person or piece of equipment placing a call. Although only one caller 110 is represented on Figure 1, it should be clear to those skilled in the art that the present invention is intended to support multiple concurrent callers, but that the latter have not been depicted on Figure 1 for clarity purposes.

The hub 120 acts as an entry point for all callers wishing to obtain call progress analysis functionality. The hub 120 is typically located in proximity to the caller 110, but could also be located within the telecommunications network 140. The hub 120 is adapted to communicate either directly or indirectly with the call progress analyzer 130. The hub 120 and the call progress analyzer could thus be co-located or located at different locations in the network 100. Throughout the following description the expressions "call progress analyzer" and "CPA" will alternately by used to refer to the call progress analyzer 130.

The telecommunications network 140 could rely on any type of protocol or standard that allows call establishment. For example the telecommunications network 140 could rely on technologies/protocols/standards such as: Public Switched Telephone Network, Integrated Service Digital Network, Global System for Mobile Telecommunications, Interim Standard-41, SS7, Voice over Internet Protocol (VoIP), Session Initiation Protocol (SIP), Real-Time Transport Protocol (RTP), Internet Engineering Task Force (IETF), Third Generation Partners Project (3GPP), International Telecommunication Union (ITU) related standards, and so forth. Furthermore, the telecommunications network 140 could consist of a hybrid telecommunications network combining two or more technologies, protocols and/or standards.

The callee is the apparatus that the caller 110 is trying to reach. The callee could be any type of apparatus such as a telephone, a cell phone, a fax machine, a modem, a computer, a voice mail system, an automated answering system, etc.

The network 100 may further include a splitter 160. The splitter 160 works in connection with the hub 120, and allows simultaneous providing to the caller 110 and the call progress analyzer 130 of call related information 170 received from the callee 150. More particularly, the splitter 160 is preferably used to provide simultaneously audio signals to both the call progress analyzer 130 and the caller 110.

It should be noted that the expression call related information 170 is being used throughout this specification to refer to all possible type of information received at the hub 120 and related to an establishment of a call between the caller 110 and the callee 150. Such call related information 170 may include, for example, SIP messages, VoIP messages, audio signals, Real-time Transport Protocol statistics, etc.

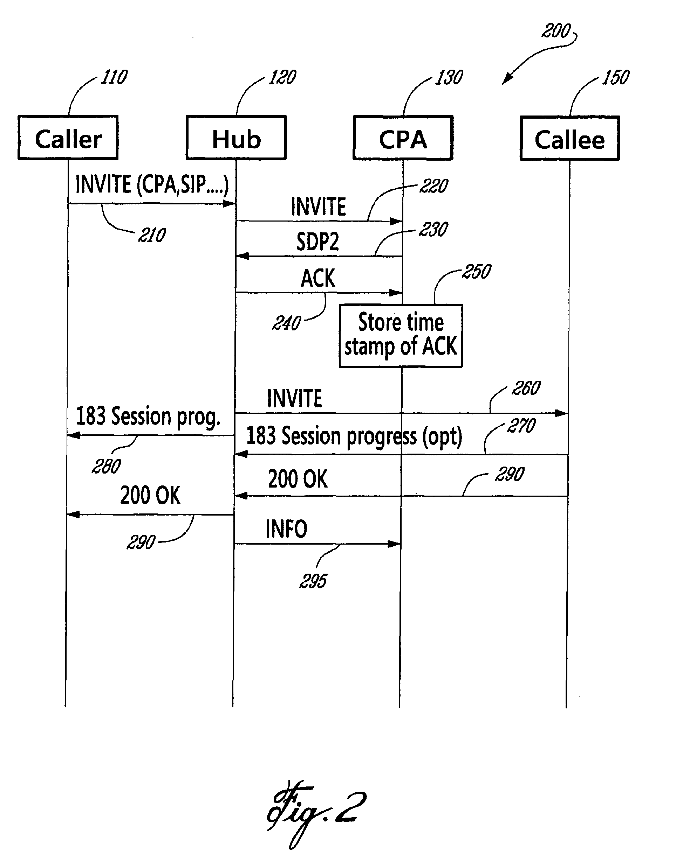

Reference is now made concurrently to Figures 1 and 2, wherein Figure 2 shows a call flow diagram 200 depicting exchanges of messages for performing call progress analysis in accordance with an aspect of the present invention. Although SIP is being used for exemplifying the present invention in Figure 2, it should be clear that SIP is only one possible protocol for practicing this aspect of the invention. Alternate protocols having similar functionalities could also be used. The caller 110 with an Invite message 210 sent to the hub 120 initiates the call progress analysis. The Invite message 210 may contain a specific CPA SIP header to dynamically request call progress analysis on the call being established. The header may also contain contextual information (for example home vs. work phone, mobile phone...) that can be used by the call progress analyzer 130. Alternatively, the hub 120 can be statically configured to perform call progress analysis on all calls received from the caller 110.

Then, the hub 120 sends an Invite message 220 to the call progress analyzer 130 using for example a send only Session Description Protocol (SDP), such as described in Request for Comment (RFC) 2327 and 3264. The call progress analyzer 130 responds with a SDP 2 message 230 that contains for example an Internet Protocol (IP) address and User Datagram Protocol (UDP) port where audio information to be analyzed should be sent. In response to the SDP2 message 230, the hub 120 sends an acknowledgement message 240 so as to close the transaction, as described in SIP RFC 3261. The call progress analyzer 130 then stores a time of reception of the acknowledgement message 240 in step 250. At that point, the call progress analyzer 130 is ready to receive call related information to analyze.

In an optional manner (not shown on Figure 2), the hub 120 may further invite the splitter 160 to join into the call establishment process. Adding in the splitter allows for example the forwarding of an audio part of the call related information received from the callee 150 to be simultaneously forwarded to the call progress analyzer 130 and the caller 110. For doing so, the splitter assigns a port and informs the hub 110 of the port to be used for the callee 150 call related information.

The call flow 200 continues by the sending of an Invite message 260 by the hub 110 to the callee 150. The Invite message 260 may consist for example of an SDP5 message requesting a bidirectional session between the callee 150 and the hub 120. In the event that the splitter 160 is involved in the call, the Invite message will additionally include information on the port assigned at the splitter 160 and to be used by the callee 150.

From that point onward, the call progress analyzer 130 starts its analyzing process, assuming that silence is emitted until some call related information is received from the hub 120 or the splitter 160 in the event the latter is involved. Should the callee 150 starts emitting call related information before being connected with the caller 110, the callee 150 would typically send a 183 Session Progress message 270 to the hub 120. The hub 120 would then notify the caller 110 through another 183 Session Progress message 280. Should the callee 150 start sending call related information after the completion of a connection between the hub 120 and the callee 150, the callee 150 will send an OK message 290 to the hub 120, which will forward the OK message 290 to the caller 110. The call flow 200 ends with an INFO message 295 being sent from the hub 120 to the call progress analyzer 130 informing the call progress analyzer 130 that the call between the caller 110 and the callee 150 is connected.

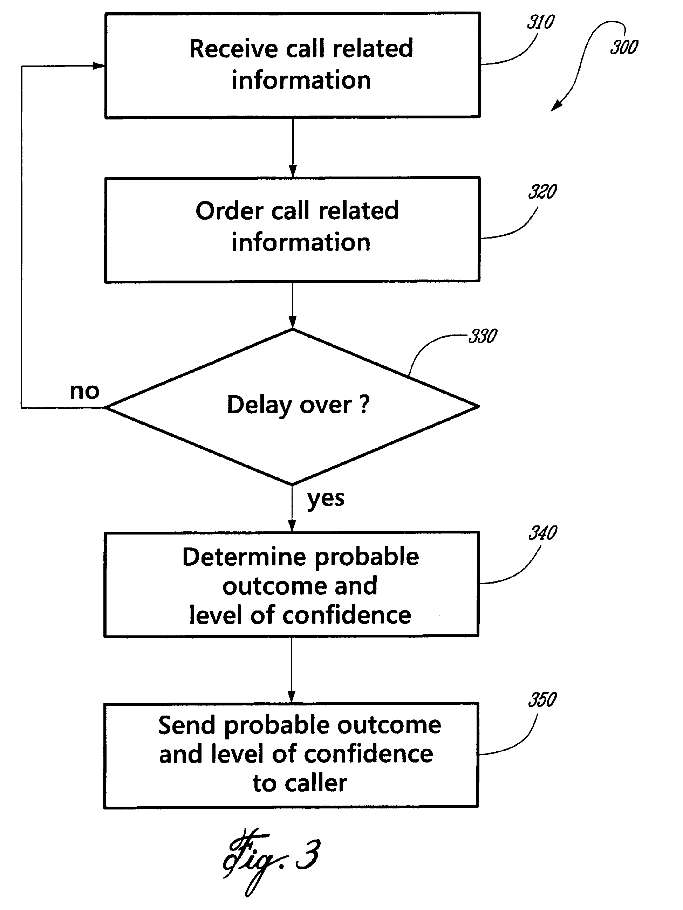

Reference is now made concurrently to Figures 1, 2 and 3 wherein Figure 3 shows a flow chart of a method 300 for performing call progress analysis in accordance with an aspect of the present invention. As the caller 110 does not know beforehand what type of callee 150 corresponds to a number being dialed, the call progress analysis of the present invention provides a useful and valuable information to the caller 110. For doing so, the method of the present invention starts at step 310 when call related information 170 is received at the call progress analyzer 130. The received call related information 170 is then ordered at step 320. The method then pursues with verifying whether a delay has lapsed at step 330. If the delay has not lapsed at step 330, the method goes back to step 310 of receiving call related information. When the delay has lapsed at step 330, the method then proceeds with a step 340 of determining at least one probable outcome for the call and determining at least one corresponding level of confidence. The details for determining the probable outcome and the corresponding level of confidence will be further described later on. The method then has a step of sending 350 the at least one determined probable outcome and the at least one corresponding level of confidence 110 to the hub that will relay it to the caller.

In the context of the present invention, the at least one probable outcome and at least one level confidence could consist of many variants. For example, the at least one probable outcome could specify one type of callee, and the corresponding at least one confidence level would consist of a confidence level for the type of callee. For example, the type of callee could consist of: voice, fax, voicemail, busy signal, fast busy, Special Information Tone tones, voicemail beep, no answer, answer then silence, answer followed by silence and hang-up. Alternatively, the at least one probable outcome could consist of numerous types of callees, each accompanied with a corresponding confidence level.

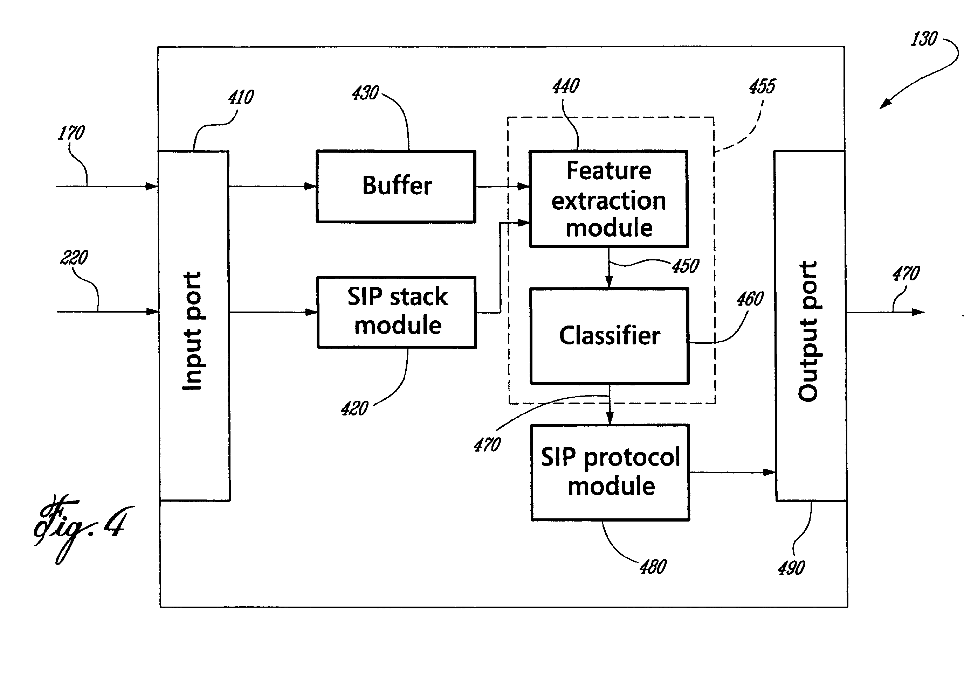

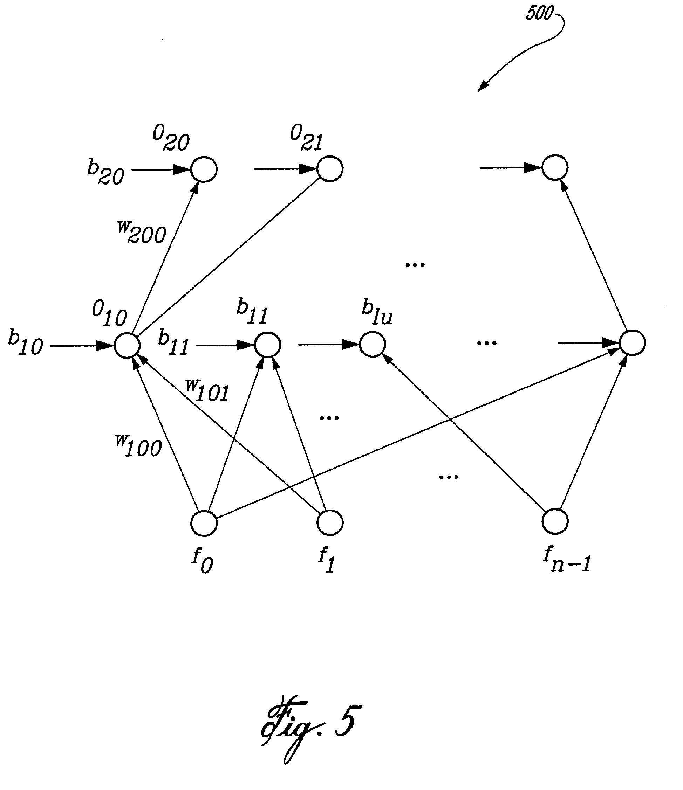

Reference is now made to Figure 4, which is a block diagram of the call progress analyzer 130. The call process analyzer 130 includes an input port 410 for receiving messages from the hub 120, such as the Invite message 220, the Acknowledgement message 240 and the Info message 295. The input port 410 forwards the received messages to the SIP stack module 420 when the latter consist of SIP messages, or to the buffer 430 when the messages are call related information 170, such as RTP packets for example. The SIP stack module 420 de-stacks the received SIP messages and forwards relevant information to a feature extraction module 440. Such information may include, when available, the contextual information provided in the Invite message 220, or the time stamp of the acknowledgement message 240. The buffer 430 orders the received call related information 170 and sends the ordered call related information to the feature extraction module 440. The feature extraction module 440 computes a feature vector 450 of relevant features including for example current and past call related information, and contextual information. The feature vector 450 is provided to a classifier 460, which may consist of an artificial neural network (shown on Figure 5). The classifier receives the feature vector 450 and computes a confidence vector 470 corresponding to the previously described call progress analysis result, potentially having a dimension equivalent to a number of possible probable outcomes. For example, if there are 4 probable outcomes, the confidence vector 470 has a dimension of 4. The confidence vector 470 is an estimation of the probability of the outcome given the received call related information and contextual information provided. The confidence vector 470 thus represents the probable outcomes with their corresponding level of confidence. The classifier 460 further has some memory capability so as to allow using information from previous feature vectors 450 in estimating the confidence vector 470. Thus the confidence vector 470 simultaneously provides a vector defining for each probable outcome the estimated confidence level. The confidence vector 470 is sent to a SIP protocol module 480 for formatting into a SIP message when such protocol is used, and the resulting SIP message is forwarded to the caller 110, or alternatively to the hub 120, through an output port 490. Of course, in the event that SIP is not used, the SIP stack module 420 and the SIP protocol module 480 would be replaced by corresponding alternatives. It is also an aspect of the present invention that the feature extraction module 440 and the classifier 460 could be combined together into a single component, which could be generally labeled as an outcome evaluating module 455. The call progress analyzer 130 could for example consist of a SIP User Agent.

Figure 5 is a schematic representation of a neuronal network 500 for performing call progress analysis in accordance with another aspect of the present invention. Typically, neural networks are organized in layers: input layer, hidden layer(s) and output layer. The input layer, identified as $f_0$ - $f_{n-1}$ on Figure 5, correspond to the information to be analyzed, and in the context of the present invention, to the feature vector 450. Thus each component of the feature vector 450 corresponds to one input of the input layer. Example of the components of the feature vector 450 could include: an amplitude of a received audio signal at a specific time, a time elapsed since the beginning of the call, a time of day, an average signal energy of past received call related information, contextual features submitted by the caller, elapsed time to receive the first RTP packet after the stored time stamp at step 250, elapsed time to receive the callee's 200 OK message (reference 290), RTP jitter, etc. Many alternatives are possible, and all measurable parameter, which could help in determining the probable outcome, could be used.

Each layer $l, 0 \leq l < L$ of the neural network 500 is composed of $U_l$ units numbered 0 to $U_{l-1}$ inclusively. An output of a unit U in a layer $l$ is computed from a weighted sum of previous layer's outputs, following equation:

$$O_{lu} = f_{lu}(b_{lu} + \sum_{i=0}^{ul-1} W_{lui}O_{(l-1)i})$$

where: f(...) is an output function of the unit, which could be for example a linear, sigmoid, perceptron or softmax; $b_{lu}$ is a bias weight of the unit;
$W_{lui}$ is a connection weight between unit $lu$ and unit $i, 0 \leq l < U_{l-1}$ in layer (l-1).

By using weighted sums at each unit U, it is thus possible to obtain at the output layer the confidence vector 470 for which a sum of all components equals 1. The confidence vector 470 thus provides a weighted confidence level for each component. To increase accuracy of obtained results, a training technique can be applied to the neural network 500, such as back propagation.

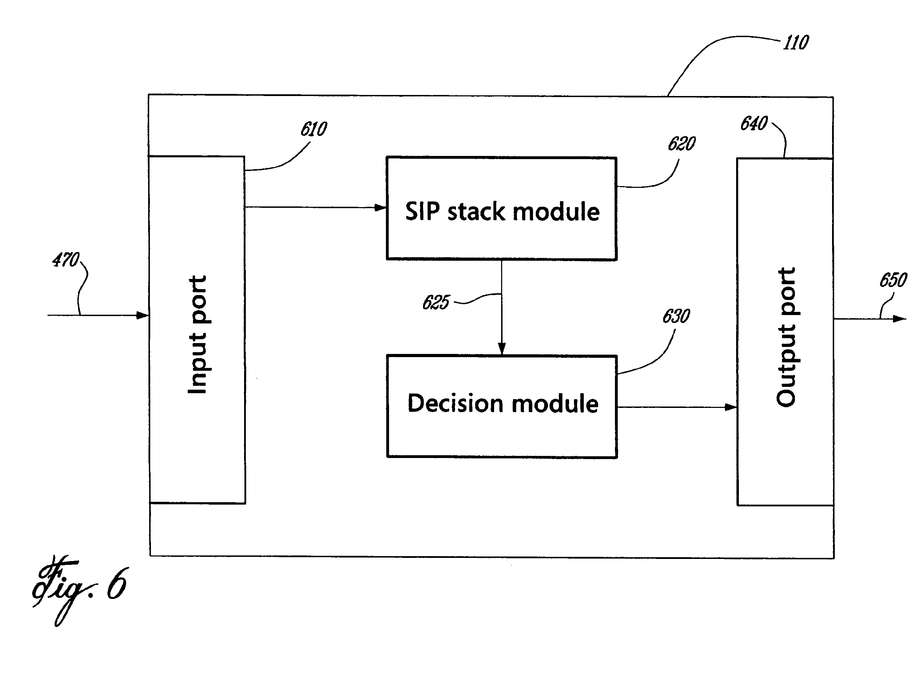

Reference is now made to Figure 6, which depicts a block diagram of the caller 110 in accordance with yet another aspect of the present invention. The caller includes an input port 610, an extraction module 620 (identified as a SIP stack module on Figure 6), a decision module 630 and an output port 640. The input port 610 is adapted to receive the call progress analysis result 470. The received call progress analysis result 470 is then provided to the extraction module 620, which for example could be a SIP stack module. The extraction module is adapted to extract from the received call progress analysis result 470 at least one probable outcome and at least one corresponding confidence level. The extraction module 470 will extract as many probable outcomes and corresponding confidence levels as included in the call progress analysis result 470. The extracted probable outcome and extracted confidence level 625 are then provided to the decision module 630. The decision module analyzes the extracted confidence levels, and determines whether one of the extracted confidence levels is above a predetermined threshold. The predetermined threshold could for example be 50 % or higher, or could consist of a minimum variant between one of the confidence level and the other confidence levels. For example, in the case where there are four probable outcomes (no answer; voice mail; busy signal; fax) and four corresponding confidence levels like in the following vector in which all components correspond to a fraction of a unit (0,2; 0,4; 0,15; 0,15), the minimum threshold of 50% would not be met, as none of the confidence level is 0,5 or higher. However, the condition of a variant could be met if the threshold was a variant of more than 10 or 20% over all the other confidence levels. In such a case, the second confidence level 0,4 would be considered above the threshold, and the probable outcome corresponding thereto, i.e. voice mail, would be conclusive. Thus, for the caller 110, the outcome of the call would be considered to be voice mail. Many other types of threshold could also be used to discriminate between the probable outcomes and their respective confidence levels. Alternatively, in the case where there is only one probable outcome and a corresponding confidence level, the decision module could verify that the confidence level is above a predetermined threshold, and if so the probable outcome is considered a conclusive result 650.

The present invention has been described by way of preferred embodiment. It should be clear to those skilled in the art that the described preferred embodiments are for exemplary purposes only, and should not be interpreted to limit the scope of the present invention. The method and call progress analyzer as described in the description of preferred embodiments can be modified without departing from the scope of the present invention. The scope of the present invention should be defined by reference to the appended claims, which clearly delimit the protection sought.

**Claims**

1. Method for performing call progress analysis, the method comprising steps of:

   receiving call related information;
   ordering received call related information; and
   evaluating ordered call related information to determine for the call related information at least one probable outcome and at least one corresponding confidence level.

2. The method of claim 1, wherein the at least one probable outcome includes an identification of a type of callee.

3. The method of claim 2, wherein the type of callee consists of one of the following: voice, fax, voicemail, busy signal, fast busy, SIT tones, voicemail beep, no answer, answer then silence, answer followed by silence and hang-up.

4. The method of claim 1, wherein the step of evaluating is performed using a neuronal network.

5. The method of claim 1, wherein the call related information consists of one of the following: audio signal, Session Initiation Protocol message or Real-time Transport Protocol statistics.

6. The method of claim 1, wherein the ordering step includes:

   buffering received call related information for a predetermined period of time.

7. The method of claim 1, further comprising a step of sending the probable outcome to a caller.

8. A call progress analyzer comprising:

   an input for receiving call related information;
   a buffer for ordering received call related information;
   an outcome evaluation module for determining from ordered call related information at least one probable outcome and at least one corresponding confidence level; and
   an output for sending the at least one probable outcome and the corresponding at least one confidence level to a caller.

9. The call progress analyzer of claim 8, wherein the at least one probable outcome includes an identification of a type of callee.

10. The call progress analyzer of claim 9, wherein the type of callee consists of one of the following: voice, fax, and voicemail.

11. The call progress analyzer of claim 8, wherein the outcome evaluation module consists of a feature extraction module and a neuronal network.

12. The call progress analyzer of claim 8, wherein the call related information consists of one of the following: audio signal, Session Initiation Protocol message or Real-time Transport Protocol data.

13. A caller for handling call progress analysis result, the caller comprising:

   an input for receiving the call progress analysis result;
   an extraction module for extracting from received call progress analysis result at least one probable outcome and at least one corresponding confidence level; and
   a decision module for determining whether the confidence level is above a predetermined threshold, and when the confidence level is above the predetermined threshold, considering the corresponding probable outcome as conclusive.

14. The caller of claim 13, wherein the predetermined threshold is 50%.

15. The caller of claim 13, wherein the call progress analysis result includes multiple probable outcomes, wherein each of the multiple probable outcomes has a corresponding confidence level.

16. The caller of claim 15, wherein the predetermined threshold corresponds to a positive variant of 10% over all of the other confidence levels.

*Fig. 1*

Fig. 2

*Fig. 3*

Fig. 4

500

$0_{20}$   $0_{21}$

$b_{20}$

$w_{200}$

$0_{10}$   $b_{11}$   $b_{1u}$

$b_{10}$   $b_{11}$

...   ...

$w_{101}$

...

$w_{100}$

...

...

$f_0$   $f_1$   $f_{n-1}$

*Fig. 5*

_Fig. 6_

Input port

470

610

SIP stack module

625

Decision module

620

630

Output port

640

110

650

**European Patent Office**

## EUROPEAN SEARCH REPORT

Application Number

EP 07 02 3429

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/081756 A1 (CHAN NORMAN C [US] ET AL) 1 May 2003 (2003-05-01)<br>* paragraphs [0002] - [0006] *<br>* paragraphs [0019], [0020], [0023], [0025], [0026] *<br>* paragraphs [0032] - [0035], [0037] - [0051] * | 1-16 | INV.<br>H04M3/51<br>H04L29/06<br><br>ADD.<br>H04M7/00 |
| A | US 7 043 006 B1 (CHAMBERS L DAVID [US] ET AL) 9 May 2006 (2006-05-09)<br>* column 1, line 45 - column 4, line 10 *<br>* column 5, line 39 - column 8, line 26 *<br>* column 11, line 57 - column 12, line 23 * | 1-16 | |
| A | US 2004/037397 A1 (ROBY PAUL VINTON [US]) 26 February 2004 (2004-02-26)<br>* abstract *<br>* paragraphs [0002] - [0006], [0009], [0016] *<br>* paragraphs [0026] - [0035] * | 1-16 | |
| A | US 6 208 970 B1 (RAMANAN KANDIAH [CA]) 27 March 2001 (2001-03-27)<br>* column 1, lines 21-64 *<br>* column 3, line 58 - column 4, line 63 *<br>* column 5, line 40 - column 6, line 27 * | 1-16 | TECHNICAL FIELDS SEARCHED (IPC)<br><br>H04M<br>H04L |
| A | US 2006/256929 A1 (NOBLE JAMES K JR [US]) 16 November 2006 (2006-11-16)<br>* paragraphs [0003] - [0006] *<br>* paragraphs [0015] - [0019] * | 1-16 | |
| A | US 6 256 619 B1 (GRICHNIK ANTHONY J [US]) 3 July 2001 (2001-07-03)<br>* abstract *<br>* column 3, lines 36-47 *<br>* column 5, lines 34-49 * | 1-16 | |

-/--

The present search report has been drawn up for all claims

| Place of search | Date of completion of the search | Examiner |
|---|---|---|
| Munich | 18 April 2008 | Agante da Silva, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

Application Number

EP 07 02 3429

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | US 2002/176557 A1 (BURGER ERIC W [US]) 28 November 2002 (2002-11-28) * the whole document * ----- | 1-16 | |
| D,A | US 2002/172349 A1 (SHEA PHILLIP N [US]) 21 November 2002 (2002-11-21) * the whole document * ----- | 1-16 | |

TECHNICAL FIELDS SEARCHED      (IPC)

The present search report has been drawn up for all claims

| Place of search | Date of completion of the search | Examiner |
|---|---|---|
| Munich | 18 April 2008 | Agante da Silva, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

**ANNEX TO THE EUROPEAN SEARCH REPORT
ON EUROPEAN PATENT APPLICATION NO.**

EP 07 02 3429

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2008

| Patent document cited in search report | | Publication date | Patent family member(s) | Publication date |
|---|---|---|---|---|
| US 2003081756 | A1 | 01-05-2003 | NONE | |
| US 7043006 | B1 | 09-05-2006 | US 2006159252 A1 | 20-07-2006 |
| US 2004037397 | A1 | 26-02-2004 | NONE | |
| US 6208970 | B1 | 27-03-2001 | NONE | |
| US 2006256929 | A1 | 16-11-2006 | NONE | |
| US 6256619 | B1 | 03-07-2001 | NONE | |
| US 2002176557 | A1 | 28-11-2002 | NONE | |
| US 2002172349 | A1 | 21-11-2002 | NONE | |

EPO FORM P0459

For more details about this annex : see Official Journal of the European Patent Office, No. 12/82

**EP 1 936 933 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20020176557 A
- US 20020172349 A, Phillip N. Shea